# EUROPEAN PATENT APPLICATION

(11) **EP 1 150 463 A2**
(43) Date of publication of application: **31.10.2001**
(21) Application number: 01303842.7
(22) Date of filing: 27.04.2001
(51) Int. Cl.: H04L 12/56, H04Q 7/30

(54) **Base station, terminal, and wireless communication system and method**

(30) Priority: 28.04.2000 JP 2000134311
(71) Applicant: SONY CORPORATION, Tokyo (JP)
(72) Inventor: Kobayashi, Tsugunao, Shinagawa-ku, Tokyo (JP)
(74) Representative: Nicholls, Michael John

(57) **Abstract**

This base station measures transmission line quality based on an error rate for received data and determines a traffic situation based on the amount of received data. When the transmission line quality or traffic situation is unsatisfactory, the base station determines a communication system to be R-ISMA; otherwise ISMA. A terminal references the system selected by the base station and determines a communication system based on a length of a data packet to be transmitted. When the packet length is small, the terminal adopts R-ISMA; otherwise ISMA.

## Description

The present invention relates to a base station apparatus, a terminal apparatus, a wireless communication system, and a wireless communication method for contention-based wireless communication.

The ISMA (Idle Signal Multiple Access) system is known as an access method of communication between one base station and a plurality of terminals using a single wireless frequency (the Journal of IEICE, vol. J64-B No. 10, pp 1107-11 13). In this ISMA system, the base station broadcasts an idle signal (hereafter referred to as the IS signal) to each terminal. Only a terminal receiving the IS signal transmits a data packet to the base station. ISMA is a contention-based communication system in which the terminal retransmits a data packet when a plurality of terminals simultaneously transmits data packets to cause contention. ISMA is known as a system for solving the problem of hidden terminals in the CSMA (Carrier Sense Multiple Access) system, another contention-based communication system.

Yet another contention-based communication system is known as R-ISMA (Reserved Idle Signal Multiple Access) which is a wireless communication system with improved communication characteristic of ISMA (IEEE Trans. On Vehicular Tech, Vol. 43, No. 3, August 1994). When contention occurs in data packets transmitted from the terminals, ISMA causes characteristic degradation. For improving this problem, R-ISMA transmits a short reservation packet before transmitting a data packet.

The following describes ISMA and R-ISMA wireless communication systems.

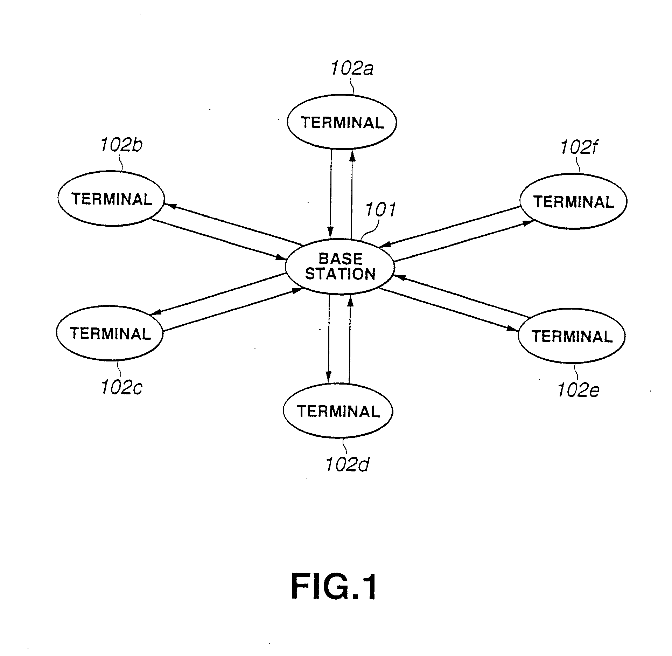

As shown in FIG. 1, an ISMA or R-ISMA wireless communication system comprises one base station 101 and one or more terminals (102a to 102f). In this wireless communication system, one base station 101 is assigned with one wireless communication frequency band (communication channel). This single communication channel is used for communication between the base station 101 and one or more terminals 102. This wireless communication system provides communication between the base station 101 and the terminal 102.

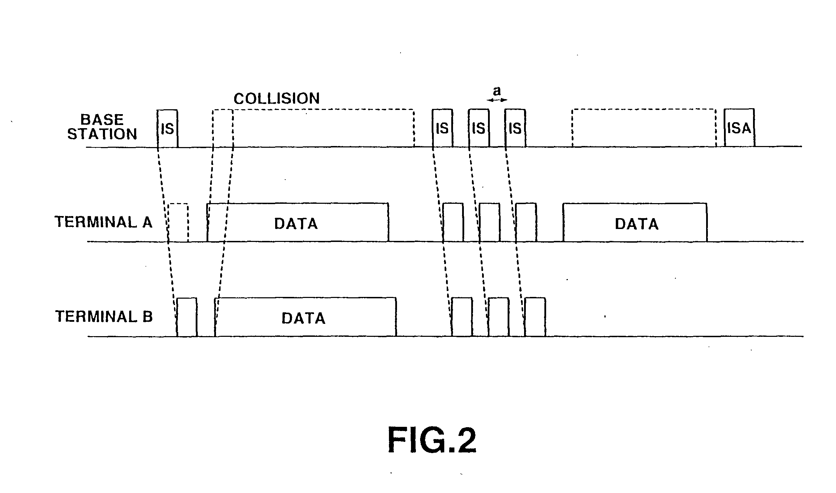

First, the ISMA data communication method is described with reference to a timing chart in FIG. 2.

When there is not provided the terminal 102 using the communication channel, the base station 101 transmits an idle signal (IS) to each terminal. This IS notifies each terminal 102 that the communication channel is available. By receiving the IS, each terminal 102 can acknowledge that the communication channel is available. When there is a data packet to be transmitted upon reception of the IS, each terminal 102 finds probability of contention with the other terminals just after reception of the IS. The terminal transmits the data packet to the base station 101 based on probability p and suspends the data packet transmission based on probability 1-p.

The base station 101 monitors whether a data packet is transmitted from the terminal 102 during delay time "a" after the IS is transmitted. This delay time "a" elapses at least after the base station 101 issues the IS until the data packet returned in response to this IS reaches the base station 101 from the terminal 102 farthest from the base station 101.

As a result of monitoring, if no data packet is detected during delay time "a", the base station 101 transmits the next IS. While no data packet is transmitted from the terminal 102, the base station 101 continues transmitting the IS at an interval of delay time "a".

When a data packet is detected as a result of monitoring, the base station 101 receives that data packet. As a result of data packet reception, the data packet may be transmitted from only one terminal 102 and this data packet is received successfully. In this case, the base station 101 notifies each terminal 102 that the communication channel is available next time it becomes idle. In addition, the base station transmits an ISA (Idle Signal Acknowledge) signal notifying that the data packet is received successfully.

As a result of data packet reception, data packets may be received from two or more terminals 102, causing contention. Alternatively, data packets may not be received correctly due to an error. In these cases, the base station 101 transmits the IS instead of the ISA signal next time the communication channel becomes idle.

The terminal 102 monitors whether the IS or ISA signal is returned after data packet transmission. When the IS is returned, the data packet is not transmitted to the base station 101 correctly. The terminal retransmits that data packet. When the ISA signal is retumed, the data packet is transmitted to the base station 101 correctly. The terminal prepares for next data packet transmission and the like.

As mentioned above, ISMA can effectively use frequency channels when performing one-to-many wireless communication and provide great allowance to the number of terminals capable of communication with the base station.

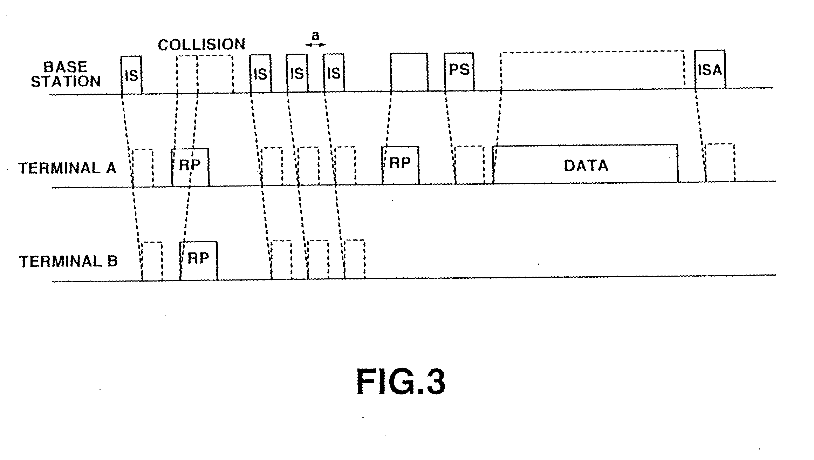

The following describes an R-ISMA data communication system with reference to a time chart in FIG. 3.

When there is not the terminal 102 using the communication channel, the base station 101 transmits an IS to each terminal. Like in ISMA, this IS is used for notifying each terminal 102 that the communication channel is available. By receiving the IS, each terminal 102 can acknowledge that the communication channel is available. When there is a data packet to be transmitted upon reception of the IS, each terminal 102 finds probability of contention with the other terminals just after reception of the IS. The terminal transmits a reservation packet to the base station 101 based on probability p and suspends the reservation packet transmission based on probability 1-p. A reservation packet is shorter than a data packet and is transmitted for the terminal 102 to reserve the communication channel. This reservation packet is assigned with a terminal ID for identifying terminals.

The base station 101 monitors whether the reservation packet is transmitted from the terminal 102 during delay time "a" from transmission of the IS. Like in ISMA, this delay time "a" elapses at least after the base station 101 issues the IS until the reservation packet returned in response to this IS reaches the base station 101 from the terminal 102 farthest from the base station 101.

As a monitoring result, the base station 101 transmits the next IS when no reservation packet is detected. While no data packet is transmitted from the terminal 102, the base station 101 continues transmitting the IS at an interval of delay time "a".

As a monitoring result, when a reservation packet is detected, the base station 101 receives that reservation packet. When the reservation packet is received, it may be transmitted from only one terminal 102 and may be received successfully. In such a case, the base station 101 transmits a polling signal (hereafter referred to as the PS) on completion of reception of that reservation packet. The PS is used for providing transmission permission of a data packet to only the terminal 102 that succeeded in the reservation packet transmission. The received reservation packet contains the terminal ID. The base station 101 transmits this terminal ID by describing it in the PS. Upon reception of the PS, the terminal 102 determines whether the terminal ID in the PS corresponds to its own. If so, as a result of the determination, the terminal transmits the data packet just after reception of the PS.

As a result of reservation packet reception, reservation packets may be received from two or more terminals 102, causing contention. Alternatively, reservation packets may not be received correctly due to an error. In these cases, the base station 101 transmits the IS instead of the PS next time the communication channel becomes idle. When the terminal which transmitted the reservation packet receives the IS instead of the PS, the terminal redetermines probability for reservation packet transmission.

When receiving the data packet correctly, the base station 101 transmits an ISA signal next time the communication channel becomes idle. When not receiving the data packet correctly, the base station 101 transmits an IS next time the communication channel becomes idle.

The terminal 102 monitors whether the IS or ISA signal is returned after data packet transmission. When the IS is returned, the data packet is not transmitted to the base station 101 correctly. The terminal transmits a reservation packet, and then retransmits that data packet. When the ISA signal is returned, the data packet is transmitted to the base station 101 correctly. The terminal prepares for next data packet transmission and the like.

Compared to ISMA, R-ISMA shortens the dead time when contention occurs by transmitting and receiving a reservation packet shorter than a data packet and the PS before transmitting the data packet.

Incidentally, ISMA and R-ISMA each have advantages and disadvantages. R-ISMA can provide excellent communication characteristics in an unfavorable communication situation by exchanging the reservation packet and the PS. Such an unfavorable situation includes, say, high traffic on the transmission line due to many terminals or a large amount of data transmitted, bad communication quality on the transmission line, and a long data packet length. However, R-ISMA degrades communication characteristics compared to ISMA in a favorable communication situation due to overhead such as the reservation packet and the PS. Such a favorable situation includes, say, low traffic due to a few terminals, good communication quality. on the transmission line, and a short data packet length.

The present invention has been made in consideration of the foregoing. It is therefore an object of the present invention to provide a base station apparatus, a terminal apparatus, a wireless communication system, and a wireless communication method for performing contention-based wireless communication with improved communication characteristics.

A base station apparatus according to the present invention performs wireless communication with one or more terminal apparatuses by using a contention-based communication system, comprising: idle signal transmission means for transmitting an idle signal for notifying a terminal apparatus that a communication channel is available; and system selection means for choosing between a first contention-based communication system in which each terminal apparatus transmits a data packet according to an idle signal without transmitting a control packet and a second contention-based communication system in which each terminal apparatus transmits a reservation packet according to an idle signal to ensure a communication channel and then transmits a data packet, wherein the system selection means chooses between the first contention-based communication system and the second contention-based communication system according to a communication situation; and the idle signal transmission means transmits to the terminal apparatus an idle signal including system specification information for specifying a communication system selected by the selection means.

This base station apparatus performs wireless communication by selectively using the first and second contention-based communication systems according to communication situations such as transmission line quality, traffic condition, a data packet length, the number of retransmissions for a data packet, and the like. The first contention-based communication system allows each terminal apparatus to transmit a data packet according to the idle signal without transmitting a control packet. The second contention-based communication system allows each terminal apparatus to transmit a reservation packet according to the idle signal for securing a communication channel, and then transmit a data packet.

A terminal apparatus according to the present invention performs wireless communication with a base station apparatus by using a contention-based communication system, comprising: idle signal reception means for receiving an idle signal notifying that a communication channel transmitted from the base station apparatus is available; system determination means for determining whether a data packet communication system should be a first contention-based communication system for transmitting a data packet to a base station apparatus according to an idle signal without transmitting a control packet or a second contention-based communication system for transmitting a reservation packet according to an idle signal to ensure a communication channel and then transmitting a data packet to a base station apparatus; and transmission means for transmitting a data packet to a base station apparatus according to reception of the idle signal when the system determination means determines a first contention-based communication system and transmitting to a base station apparatus a reservation packet including terminal identification information according to reception of the idle signal when the system determination means determines a second contention-based communication system, wherein the idle signal includes system selection information for choosing between the first contention-based communication system and the second contention-based communication system; and the system determination means determines a communication system according to the system selection information and a communication situation.

This terminal apparatus performs wireless communication by selectively using the first and second contention-based communication systems according to communication situations such as transmission line quality, traffic condition, a data packet length, the number of retransmissions for a data packet, and the like. The first contention-based communication system allows each terminal apparatus to transmit a data packet according to the idle signal without transmitting a control packet. The second contention-based communication system allows each terminal apparatus to transmit a reservation packet according to the idle signal for securing a communication channel, and then transmit a data packet.

A wireless communication system according to the present invention performs wireless communication between one base station apparatus and one or more terminal apparatuses by using a contention-based communication system, wherein a base station apparatus comprises idle signal transmission means for transmitting an idle signal for notifying a terminal apparatus of availability of a communication channel; and system selection means for choosing between a first contention-based communication system in which each terminal apparatus transmits a data packet according to an idle signal without transmitting a control packet and a second contention-based communication system in which each terminal apparatus transmits a reservation packet according to an idle signal to ensure a communication channel and then transmits a data packet; the system selection means chooses between the first contention-based communication system and the second contention-based communication system according to a communication situation; and the idle signal transmission means transmits to each terminal apparatus an idle signal including system specification information for specifying a communication system selected by the selection means; each terminal apparatus comprises system determination means for determining a data packet communication system to be a first contention-based communication system or a second contention-based communication system; and transmission means for transmitting a data packet to a base station apparatus according to reception of the idle signal when the system determination means determines a first contention-based communication system and transmitting a reservation packet including terminal identification information to a base station apparatus according to reception of the idle signal when the system determination means determines a second contention-based communication system; and the system determination means determines a communication system according to the system selection information and a communication situation.

This wireless communication system performs wireless communication by selectively using the first and second contention-based communication systems according to communication situations such as transmission line quality, traffic condition, a data packet length, the number of retransmissions for a data packet, and the like. The first contention-based communication system allows each terminal apparatus to transmit a data packet according to the idle signal without transmitting a control packet. The second contention-based communication system allows each terminal apparatus to transmit a reservation packet according to the idle signal for securing a communication channel, and then transmit a data packet.

A wireless communication method according to the present invention is implemented between one base station apparatus and one or more terminal apparatus by using a contention-based communication system, wherein a base station apparatus side chooses according to a communication situation between a first contention-based communication system in which each terminal apparatus transmits a data packet according to an idle signal without transmitting a control packet and a second contention-based communication system in which each terminal apparatus transmits a reservation packet according to an idle signal to ensure a communication channel and then transmits a data packet; a base station apparatus side transmits an idle signal including system specification information specifying a selected communication system for notifying a terminal apparatus of availability of a communication channel; a terminal apparatus side determines a data packet communication system to be a first contention-based communication system or a second contention-based communication system according to terminal identification information included in the idle signal and a communication situation; and a terminal apparatus side transmits a data packet to a base station apparatus according to reception of the idle signal when a first contention-based communication system is determined and transmits a reservation packet including terminal identification information to a base station apparatus according to reception of the idle signal when a second contention-based communication system is determined.

This wireless communication method performs wireless communication by selectively using the first and second contention-based communication systems according to communication situations such as transmission line quality, traffic condition ,a data packet length, the number of retransmissions for a data packet, and the like. The first contention-based communication system allows each terminal apparatus to transmit a data packet according to the idle signal without transmitting a control packet. The second contention-based communication system allows each terminal apparatus to transmit a reservation packet according to the idle signal for securing a communication channel, and then transmit a data packet.

As mentioned above, the base station apparatus, the terminal apparatus, the wireless communication system, and the wireless communication method according to the present invention perform wireless communication by selectively using the first and second contention-based communication systems according to communication situations such as transmission line quality, traffic condition ,a data packet length, the number of retransmissions for a data packet, and the like. The first contention-based communication system allows each terminal apparatus to transmit a data packet according to the idle signal without transmitting a control packet. The second contention-based communication system allows each terminal apparatus to transmit a reservation packet according to the idle signal for securing a communication channel, and then transmit a data packet.

The present invention can select a communication system having favorable communication characteristics and perform effective data communication by appropriately changing the communication systems according to communication situations.

The invention will be more clearly understood from the following description, given by way of example only, with reference to the accompanying drawings, in which:
FIG. 1 is a configuration chart showing a wireless communication system to which ISMA and R-ISMA schemes are applied;
FIG. 2 is a time chart explaining ISMA-based communication processing;
FIG. 3 is a time chart explaining R-ISMA-based communication processing;
FIG. 4 is a configuration chart for a wireless communication system according to the present invention;
FIG. 5 is a time chart explaining communication processing according to the above-mentioned wireless communication system;
FIG. 6 is a block configuration chart for a base station in the above-mentioned wireless communication system;
FIG. 7 is a block configuration chart for a terminal in the above-mentioned wireless communication system;
FIG. 8 is a flowchart explaining operations of the above-mentioned base station; and
FIG. 9 is a flowchart explaining operations of the above-mentioned terminal.

Several preferred embodiments of the wireless communication system according to the present invention will be described below with reference to the accompanying drawings.

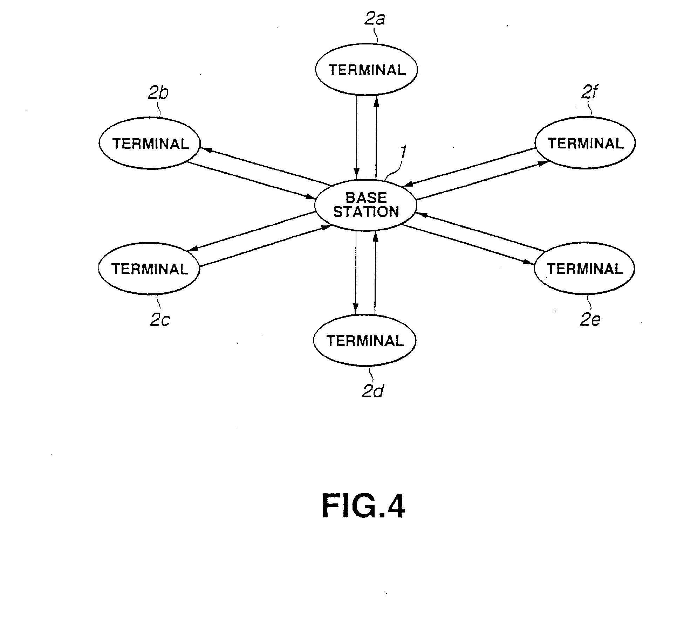

As shown in FIG. 4, a wireless communication system according to the embodiment of the present invention comprises one base station 1 and one or more terminals (2a to 2f).

In this wireless communication system, one base station is assigned one wireless communication frequency band (communication channel). This communication channel is used for communication between the base station 1 and one or more terminals 2. The wireless communication system provides communication between the base station 101 and the terminal 102.

The wireless communication system uses the ISMA and R-ISMA communication schemes which are selectively used for communication according to communication situations. These situations are dependent on the total amount of data transmission over the communication channel and include, say, a traffic situation, communication quality of the transmission line such as quality determined by S/N, and length of a data packet transmitted.

In the following description, transmission from the base station to a terminal is called a downlink. Transmission from a terminal to the base station is called an uplink.

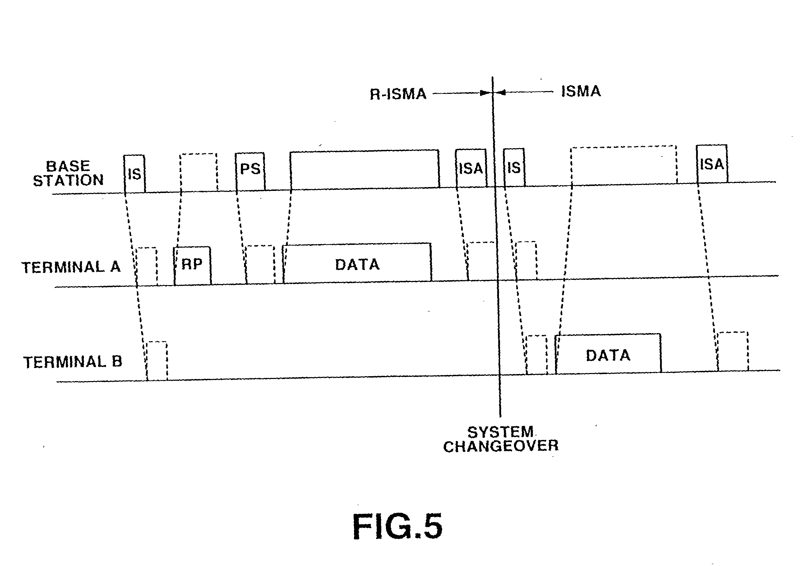

Communication systems used for this wireless communication system are explained with reference to a time chart in FIG. 5.

Before transmitting the IS, the base station 1 measures a traffic situation on the uplink transmission line and the transmission line quality. Based on these two measurement results, the base station 1 determines R-ISMA, ISMA, or no system selected, having a terminal select the communication system to be used.

More specifically, a traffic situation is measured from the total amount of data received within specified time. As a measurement result, ISMA is selected when the uplink traffic is less than or equal to threshold value A. For example, this means that the total amount of transmitted data is smaller than a given threshold. R-ISMA is selected when the uplink traffic is greater than or equal to threshold value B. For example, this means that the total amount of transmitted data is greater than a given threshold. In this case, it is assumed that B > A. No system is assumed to be selected when the traffic on the uplink transmission line is between the threshold values A and B.

The transmission line quality is measured by using, say, a bit error rate and a packet error rate. As a measurement result, ISMA is selected when the transmission line quality is greater than or equal to threshold value C. For example, this means that the reciprocal of an error rate is greater than a given threshold. R-ISMA is selected when the transmission line quality is less than or equal to threshold value D. For example, this means that the reciprocal of an error rate is smaller than a given threshold. In this case, it is assumed that C > D. No system is assumed to be selected when the transmission line quality is between the threshold values C and D.

Here, the base station 1 selects the communication system to be used according to the transmission line traffic and the transmission line quality as two parameters. However, it is also possible to prefer either parameter to the other for determining the system to use. Only when the preferential parameter results in selection of no systems, the other parameter is used for selecting the system.

It is possible to use any procedure for selecting parameters. For example, both parameters can be given weights for selecting systems. Alternatively, only one of the parameters can be measured and used for selecting systems.

The base station 1 describes system selection information indicating the selected system in an IS and transmits this IS to each terminal 2. The system selection information denotes R-ISMA, ISMA, or no system selected.

When receiving the IS, the terminal 2 detects the system selection information described in the IS. Based on the length of a data packet to be transmitted and the system selection information in the IS, the terminal 2 determines whether the communication system to be used should be R-ISMA or ISMA.

More specifically, when the system selection information contains information indicating R-ISMA, the terminal 2 determines the communication system to be R-ISMA. When the system selection information contains information indicating ISMA, the terminal 2 determines the communication system to be ISMA. When no system is selected and the length of a data packet to be transmitted is greater than or equal to given threshold value E, the terminal 2 determines the communication system to be R-ISMA. When no system is selected and the length of a data packet to be transmitted is smaller than or equal to threshold value E, the terminal 2 determines the communication system to be ISMA.

It is possible to use any procedure for determining systems. For example, it may be preferable to determine the packet length to be transmitted in preference to the system selection information described in the IS. In this case, R-ISMA is used when the length of the data packet to be transmitted is greater than or equal to a given threshold value E. By contrast, ISMA is used when the length of the data packet to be transmitted is smaller than equal to a given threshold value F, where E > F. When the packet length is between threshold value E and threshold value F, the communication system is determined based on the system selection information. For determining like this, the base station 1 needs to generate the system selection information so that the information of no system selected is not included. For example, each threshold value needs to be specified like A = B or C = D.

The terminal 2 determines the communication system to be used as mentioned above. When R-ISMA is selected, the terminal 2 then starts communication according to R-IMSA by transmitting a reservation packet. When ISMA is selected, the terminal 2 then starts communication according to IMSA by transmitting a data packet.

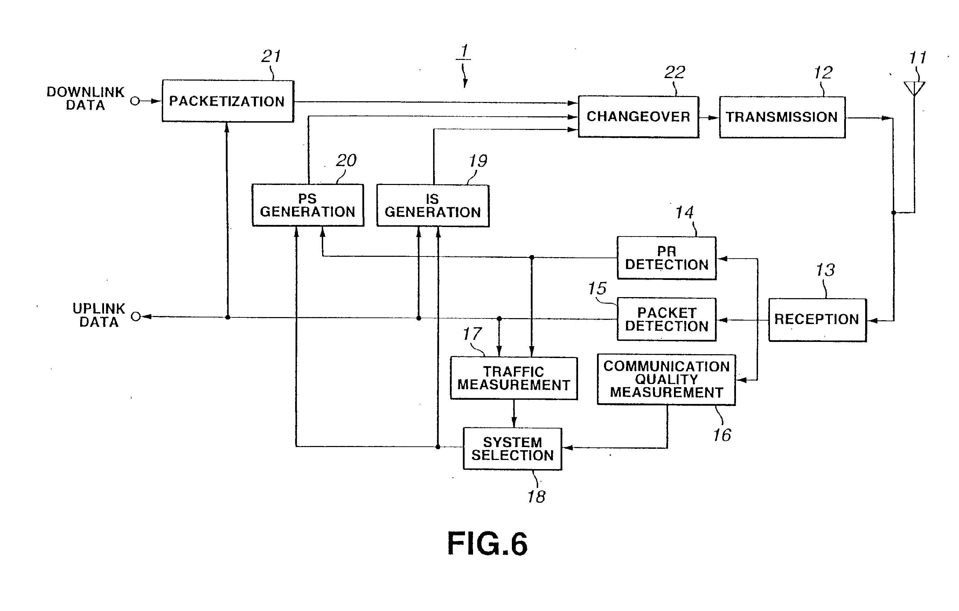

The following describes a configuration of the base station 1 with reference to FIG. 6.

The base station 1 comprises an antenna 11, a transmission circuit 12, a reception circuit 13, a reservation packet (RP) detection circuit 14, a packet detection circuit 15, a communication quality measuring circuit 16, a traffic measuring circuit 17, a system selection circuit 18, an IS generation circuit 19, a polling signal (PS) generation circuit 20, a packetizing circuit 21, and a changeover circuit 22.

The antenna 11 transmits and receives an RF signal and converts frequencies for RF and baseband signals.

The transmission circuit 12 performs modulation and error correction coding and the like for data transmitted to each terminal 2.

The reception circuit 13 performs demodulation and error correction coding for signals transmitted from the antenna 11.

The RP detection circuit 14 is supplied with received data from the reception circuit 13 and detects the reservation packet in the received data. When one reservation packet is detected correctly, the circuit detects a terminal ID described in the reservation packet and supplies it to the PS generation circuit 20.

The packet detection circuit 15 is supplied with received data from the reception circuit 13 and detects an uplink data packet from that received data. There may be the case where one uplink data packet is received correctly with no contention. Namely, a plurality of terminals 2 do not transmit data packets concurrently, causing no transmission error. In this case, the detected data packet is output as uplink data outside the system via an output interface.

As regards the received data from the reception circuit 22, the communication quality measuring circuit 16 measures values indicating the transmission line quality such as a bit error rate, a packet error rate, and the like during a specified period. An average value is found from the measuring results. The communication quality measuring circuit 16 supplies the result to the system selection circuit 18.

The traffic measuring circuit 17 counts packets detected by the RP detection circuit 14 and the packet detection circuit 15 for a specified period. The number of packets which have arrived within this period is supplied to the system selection circuit 18.

The system selection circuit 18 determines the communication system to be R-ISMA, ISMA, or no system selected. This determination is based on the measurement result about the transmission line quality obtained from the communication quality measuring circuit 16 and the number of packets obtained from the traffic measuring circuit 17.

Specifically, the system selection circuit 18 selects ISMA when the number of packets detected by the traffic measuring circuit 17 is smaller than or equal to given threshold value A. This means that the transmission line traffic is lower than threshold value A. The system selection circuit 18 selects R-ISMA when the number of packets detected by the traffic measuring circuit 17 is greater than or equal to given threshold value B. This means that the transmission line traffic is higher than threshold value A, where B > A. When the number of uplink packets is between threshold values A and B, ISMA and R-ISMA are selected as follows. Namely, ISMA is selected when the transmission line quality measured by the communication quality measuring circuit 16 is greater than or equal to given threshold value C. For example, this means that the reciprocal of an error rate is greater than threshold value C. R-ISMA is selected when the transmission line quality measured by the communication quality measuring circuit 16 is smaller than or equal to given threshold value D. For example, this means that the reciprocal of an error rate is smaller than threshold value D, where C > D. No system is assumed to be selected when the transmission line quality is between the threshold values C and D.

The system selection circuit 18 supplies the IS generation circuit 19 with the selected system selection information (R-ISMA, ISMA, or no system selected).

The IS generation circuit 19 generates IS and ISA signals. The IS generation circuit 19 outputs these signals at the timing when the packet detection circuit 15 receives no uplink data packet and no downlink is established. The IS generation circuit 19 generates IS and ISA signals including the system selection information (R-ISMA, ISMA, or no system selected) selected by the system selection circuit 18. The IS generation circuit 19 supplies the generated IS and ISA signals to the changeover circuit 22.

The PS generation circuit 20 generates a polling signal (PS). The PS is generated when the system selection circuit 18 selects R-ISMA as the communication system and the RP detection circuit 14 detects a reservation packet. The PS generation circuit 20 provides the PS with a terminal ID contained in the reservation packet. When a reservation packet is detected even if the system selection circuit 18 selects ISMA, the terminal 2 is assumed to select R-ISMA. In this case, the RP detection circuit 14 generates the PS by describing therein the terminal ID contained in the reservation packet. The PS generation circuit 20 supplies the generated PS signal to the changeover circuit 22.

The packetizing circuit 21 packetizes downlink data input from outside via an input interface. The packetizing circuit 18 outputs a downlink data packet when the packet detection circuit 15 determines that the terminal 2 transmits no uplink data packet. The packetizing circuit 21 supplies the generated data packet to the changeover circuit 22.

As mentioned above, the packetizing circuit 21 supplies a downlink data packet. The PS generation circuit 20 supplies a PS. The IS generation circuit 19 supplies IS and ISA signals. The changeover circuit 4 provides the transmission circuit 12 with these supplied packet and signals according to their transmission timing.

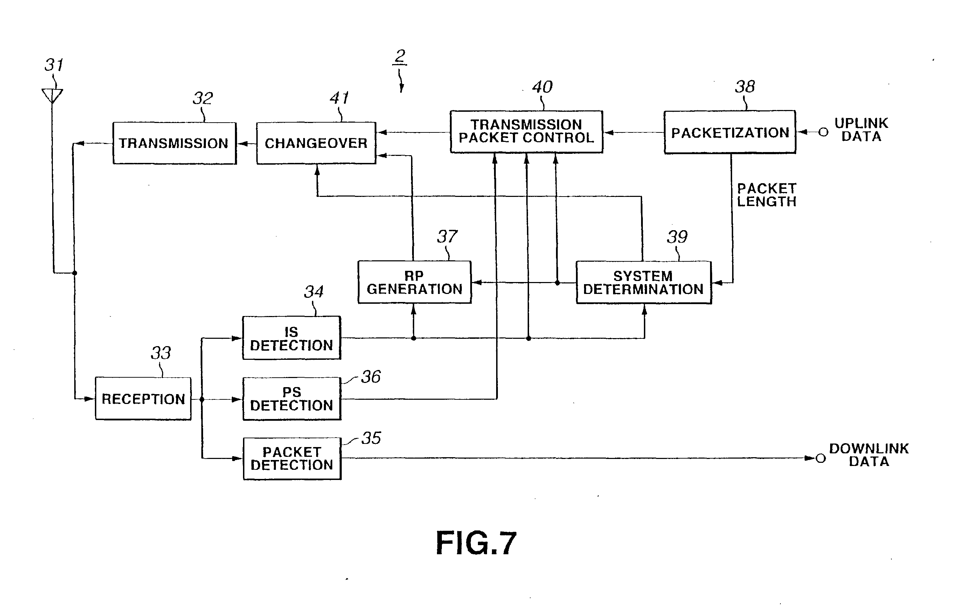

Next, the following describes a configuration of the terminal 2 with reference to FIG. 7.

The terminal 2 comprises an antenna 31, a transmission circuit 32, a reception circuit 33, an IS detection circuit 34, a packet detection circuit 35, a PS detection circuit 36, a reservation packet (RP) generation circuit 37, a packetizing circuit 38, a system determination circuit 39, a transmission packet control circuit 40, and a changeover circuit 41.

The antenna 31 transmits and receives an RF signal and converts frequencies for RF and baseband signals.

The transmission circuit 32 performs modulation and error correction coding and the like for data transmitted to the base station 1.

The reception circuit 33 performs demodulation and error correction coding for signals transmitted from the antenna 31.

The IS detection circuit 34 detects IS and ISA signals transmitted from the base station 1 and extracts system selection information contained in the IS and ISA signals. The IS detection circuit 34 provides the RP generation circuit 37, the transmission packet control circuit 40, and the system determination circuit 39 with timings for detecting the IS and ISA signals and the extracted system selection information.

The packet detection circuit 35 identifies a data packet transmitted from the base station 1. When the received data packet is transmitted from the base station 1 to the relevant terminal 2, this data packet is output as a downlink data to the outside via an output interface and the like.

The PS detection circuit 36 detects a PS transmitted from the base station I, references the terminal ID contained in the PS, and determines whether the PS is transmitted to the relevant terminal 2. When the PS is transmitted to the relevant terminal 2, the PS detection circuit 36 notifies the transmission packet control circuit 40 of the timing for detecting that PS.

The RP generation circuit 37 generates a reservation packet when R-ISMA is selected according to the system determination information obtained from the system determination circuit 29. When ISMA is selected, no reservation packet is generated. More specifically, the RP generation circuit 37 generates a reservation packet when an uplink data packet to be transmitted is packetized, the IS detection circuit 34 detects the IS, and R-ISMA is selected. The RP generation circuit 37 finds transmission probability for the generated reservation packet. In the case of probability p, the circuit performs transmission. In the case of probability 1-p, the circuit suspends reservation packet transmission and waits for the next IS.

The packetizing circuit 38 packetizes uplink data which is input from the outside via an input interface and the like. The packetizing circuit 38 supplies the generated data packet to the transmission packet control circuit 40. Further, the packetizing circuit 38 provides the system determination circuit 39 with information indicating the length of the generated packet.

Based on the system selection information included in the IS and the packet length obtained from packetization of data input as uplink data, the system determination circuit 39 determines whether the communication system should be R-ISMA or ISMA. More specifically, when the system selection information contains information indicating R-ISMA, the system determination circuit 39 determines the communication system to be R-ISMA. When the system selection information contains information indicating ISMA, the system determination circuit 39 determines the communication system to be ISMA. When the system selection information indicates no system selected and the length of a data packet to be transmitted is greater than or equal to given threshold value E, the circuit determines the communication system to be R-ISMA. When the system selection information indicates no system selected and the length of a data packet to be transmitted is smaller than or equal to threshold value E, the circuit determines the communication system to be ISMA. Instead of the above-mentioned procedure, the system determination circuit 39 may determine the communication system, say, according to the data packet length in preference to the system selection information.

The communication system determined by the system determination circuit 39 is notified to the RP generation circuit 37, the transmission packet control circuit 40, and the changeover circuit 41.

The transmission packet control circuit 40 schedules transmission timing for the uplink data packet supplied from the packetizing circuit 38 and determines whether to transmit the data packet. More specifically, when the system determination circuit 39 determines the communication system to be ISMA and the IS detection circuit 36 detects an IS, a packet is transmitted just after reception of the IS. At this time, the transmission packet control circuit 40 finds probability of contention with other terminals. In the case of probability p, the circuit transmits a data packet. In the case of probability 1-p, the circuit suspends data packet transmission. When the system determination circuit 39 determines the communication system to be R-ISMA and the PS detection circuit 36 detects that the PS contains its own terminal ID, the transmission packet control circuit 40 transmits the data packet independently of the transmission probability just after reception of that PS.

The transmission packet control circuit 40 also determines whether the IS or ISA signal is detected just after transmitting the data packet. Detection of the IS indicates that the base station 1 does not receive the most recently transmitted data packet. In this case, this circuit retransmits the most recently transmitted data packet. Detection of the ISA signal indicates that the base station 1 receives the most recently transmitted data packet. In this case, the circuit prepares transmission of the next data packet.

The changeover circuit 41 selectively supplies the transmission circuit 32 with uplink data supplied from the transmission packet control circuit 40 and an RP signal supplied from the RP generation circuit 37 according to the determined communication system and communication timing.

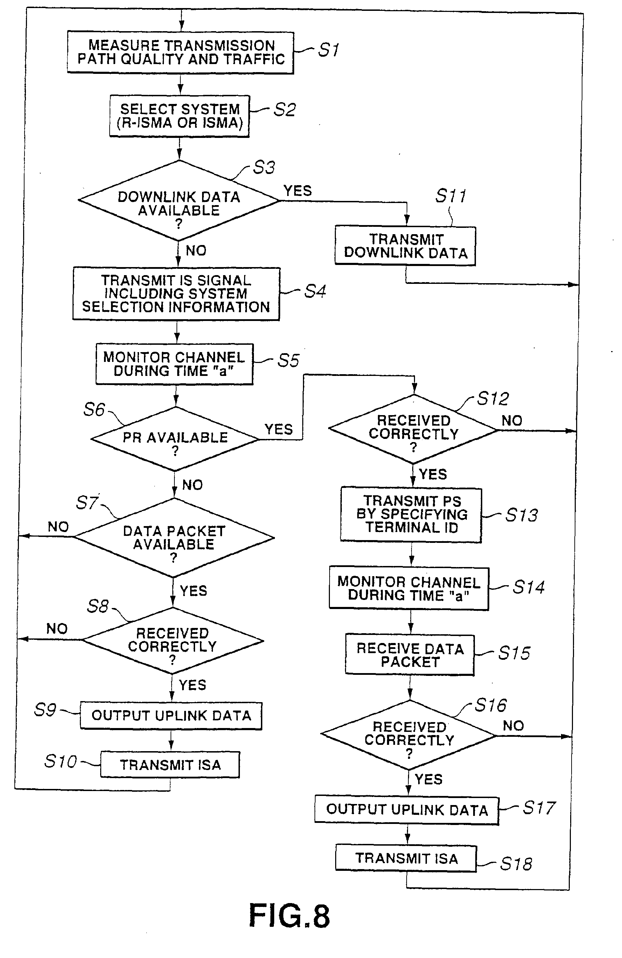

The following describes an operational procedure of the base station 1 with reference to the flowchart in FIG. 8.

The base station 1 references an uplink packet transmitted from the terminal 2 to measure transmission line quality and a traffic situation for a specified period (step S1). Based on the measurement result, the base station determines whether the communication system should be R-ISMA or ISMA.

The base station 1 then determines whether there is downlink data to be transmitted (Step S3). When the downlink data is available according to the determination result, the base station transmits that downlink data (Step S11) and repeats the process from step S1. When no downlink data is available according to the determination result, the base station generates an IS containing the system selection information and transmits this IS (Step S4).

When transmitting the IS, the base station monitors an active communication channel during delay time "a" (Step S5). As a monitoring result, the base station determines whether a reservation packet (RP) (Step S6) or a data packet is received (Step S7).

When the data packet is received, the base station determines whether it is received correctly, say, by referencing a CRC code of that data packet (Step S8). When the data packet is not received correctly, the base station repeats the process from step S 1. When the data packet is received correctly, the base station outputs the received data as uplink data to the network (Step S9) and transmits the ISA signal to the terminal 2 (Step S10).

When the reservation packet is received at step S6, the base station determines whether it is received correctly, say, by referencing a CRC code of that reservation packet (Step S12). When the reservation packet is not received correctly, the base station repeats the process from step S1. When the reservation packet is received correctly, the base station generates a PS describing the terminal ID contained in the RP signal and transmits this PS (Step S13). When transmitting the PS, the base station monitors an active communication channel during delay time "a" (Step S14) and receives the transmitted data packet (Step S 15). The base station determines whether the data packet is received correctly, say, by referencing its CRC code (Step S16). When the data packet is not received correctly, the base station repeats the process from step S1. When the data packet is received correctly, the base station outputs the received data as uplink data to the network (Step S17) and transmits the ISA signal to the terminal 2 (Step S18).

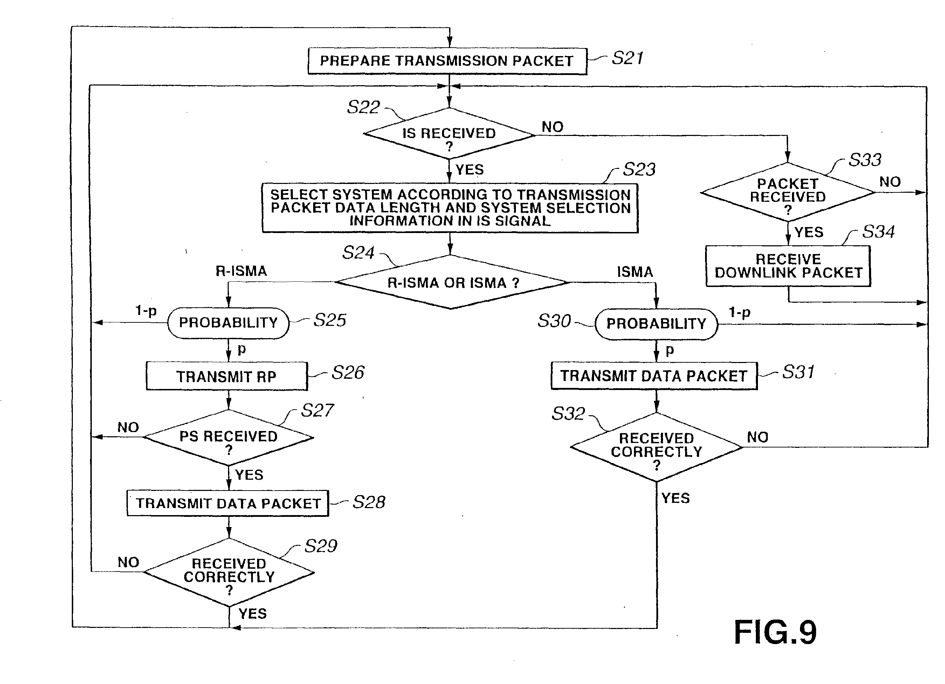

The following describes an operational procedure of the terminal 2 with reference to the flowchart in FIG. 9.

When data to be transmitted is input, the terminal 2 packetizes that data for preparing a data packet (Step S21) and is ready for receiving an IS (Step S22).

When the IS is received, it contains the system selection information. Based on this information and the length of the data packet prepared for transmission, the terminal determines whether the communication system used for transmission should be R-ISMA or ISMA (step S23).

When the communication system is determined to be R-ISMA (step S24), the terminal computes transmission permission probability (step S25). When the transmission permission probability is 1-p, the terminal returns to step S22 and waits for the next IS to receive. When the transmission permission probability is p, the terminal transmits a reservation packet (RP) (step S26). Then, the terminal waits for a PS to receive and determines whether it is received (step S27). When the PS is not received or the IS is transmitted next, the terminal returns to step S22 and waits for the next IS to receive. When the PS is received, the terminal transmits the prepared data packet (step S28). The terminal determines whether the base station 1 transmits the IS or ISA signal after transmission of the data packet (step S29). When the IS is transmitted, it is assumed that the transmitted data packet is not received correctly. The terminal returns to step S22 and waits for the next IS to receive. When the ISA signal is transmitted, it is assumed that the transmitted data packet is received correctly. The terminal returns to step S2 and prepares for transmission of the next data packet.

When the communication system is determined to be ISMA (step S24), the transmission permission probability is computed (step S30). When the transmission permission probability is 1-p, the terminal returns to step S22 and waits for the next IS to receive. When the transmission permission probability is p, the terminal transmits the prepared data packet (step S31). The terminal determines whether the base station 1 transmits the IS or ISA signal after transmission of the data packet (step S32). When the IS is transmitted, it is assumed that the transmitted data packet is not received correctly. The terminal returns to step S22 and waits for the next IS to receive. When the ISA signal is transmitted, it is assumed that the transmitted data packet is received correctly. The terminal returns to step S21 and prepares for transmission of the next data packet.

When the terminal receives a downlink data packet from the base station 1 (step S33) while waiting for reception of the ISA signal at step S22, the terminal receives that packet and outputs it as downlink data via an interface (step S34). The terminal then returns to step S22 and waits for reception of the next IS.

As mentioned above, the wireless communication system according to the embodiment of the present invention appropriately chooses between R-ISMA and ISMA for communication based on communication situations such as traffic situations, communication line quality, data packets to be transmitted, and the like. Accordingly, the wireless communication system can select a communication system having favorable communication characteristics for performing effective data communication. Since the system can be changed depending on various communication situations, it is possible to appropriately configure the system according to the communication environment and provide the best communication characteristic independent of the communication environment.

The above-mentioned embodiment of the present invention performs wireless communication by using R-ISMA and ISMA The present invention is not limited to R-ISMA and ISMA. It may be preferable to choose between one communication system which transmits a relatively short control packet from the terminal side to ensure a communication channel, then transmits a data packet and the other communication system which transmits the data packet without transmitting the control packet.

The embodiment of the present invention offers an example of changing communication systems according to the length of a data packet transmitted from the terminal side. It may be preferable to manage the number of data packet retransmissions on the terminal side and choose between R-ISMA and ISMA according to this value.

## Claims

1. A base station apparatus for performing wireless communication with one or more terminal apparatuses by using a contention-based communication system, comprising:
idle signal transmission means for transmitting an idle signal for notifying a terminal apparatus that a communication channel is available; and
system selection means for choosing between a first contention-based communication system in which each terminal apparatus transmits a data packet according to an idle signal without transmitting a control packet and a second contention-based communication system in which each terminal apparatus transmits a reservation packet according to an idle signal to ensure a communication channel and then transmits a data packet, wherein
said system selection means chooses between said first contention-based communication system and said second contention-based communication system according to a communication situation; and
said idle signal transmission means transmits to said terminal apparatus an idle signal including system specification information for specifying a communication system selected by said selection means.

2. The base station apparatus according to claim 1, wherein said system selection means chooses a communication system according to transmission line quality.

3. The base station apparatus according to claim 1 or 2, wherein said system selection means chooses a communication system according to a traffic situation on a transmission line.

4. The base station apparatus according to claim 1, 2 or 3 wherein
said system selection means chooses between said first contention-based communication system and said second contention-based communication system or leaves no communication system selected according to a communication situation; and
said idle signal transmission means transmits to said terminal an idle signal including system specification information specifying a communication system selected by said selection means or specifying no communication system selected.

5. The base station apparatus according to any preceding claim, wherein when said reservation packet is received from one terminal apparatus, polling signal transmission means is provided for transmitting to each terminal apparatus a polling signal including terminal identification information for specifying that terminal apparatus.

6. A terminal apparatus for performing wireless communication with a base station apparatus by using a contention-based communication system, comprising:
idle signal reception means for receiving an idle signal notifying that a communication channel transmitted from said base station apparatus is available;
system determination means for determining whether a data packet communication system should be a first contention-based communication system for transmitting a data packet to a base station apparatus according to an idle signal without transmitting a control packet or a second contention-based communication system for transmitting a reservation packet according to an idle signal to ensure a communication channel and then transmitting a data packet to a base station apparatus;
transmission means for transmitting a data packet to a base station apparatus according to reception of said idle signal when said system determination means determines a first contention-based communication system and transmitting to a base station apparatus a reservation packet including terminal identification information according to reception of said idle signal when said system determination means determines a second contention-based communication system, wherein
said idle signal includes system selection information for choosing between said first contention-based communication system and said second contention-based communication system; and
said system determination means determines a communication system according to said system selection information and a communication situation.

7. The terminal apparatus according to claim 6, wherein said system determination means selects a communication system according to said system selection information and a length of a data packet to be transmitted.

8. The terminal apparatus according to claim 6 or 7, wherein said system determination means selects a communication system according to said system selection information and the number of retransmissions for a data packet to be transmitted.

9. The terminal apparatus according to claim 6, 7 or 8 wherein said transmission means transmits a data packet according to reception of a polling signal when a polling signal received after reservation packet transmission contains its own terminal specification information.

10. A wireless communication system for performing wireless communication between one base station apparatus according to any one of claims 1 to 5 and one or more terminal apparatuses according to any one of claims 6 to 9 by using a contention-based communication system.

11. A wireless communication method implemented between one base station apparatus and one or more terminal apparatus by using a contention-based communication system, comprising the steps of:
choosing, at a base station side, according to a communication situation between a first contention-based communication system in which each terminal apparatus transmits a data packet according to an idle signal without transmitting a control packet and a second contention-based communication system in which each terminal apparatus transmits a reservation packet according to an idle signal to ensure a communication channel and then transmits a data packet;
transmitting, at the base station side, an idle signal including system specification information specifying a selected communication system for notifying a terminal apparatus of availability of a communication channel;
determining, at a terminal apparatus side, a data packet communication system to be a first contention-based communication system or a second contention-based communication system according to terminal identification information included in said idle signal and a communication situation; and
at the terminal apparatus side, transmitting a data packet to a base station apparatus according to reception of said idle signal when a first contention-based communication system is determined and transmitting a reservation packet including terminal identification information to a base station apparatus according to reception of said idle signal when a second contention-based communication system is determined.

12. The wireless communication method according to claim 11, wherein a base station apparatus side selects a communication system according to transmission line quality.

13. The wireless communication method according to claim 11 or 12, wherein a base station apparatus side selects a communication system according to a traffic situation on a transmission line.

14. The wireless communication method according to claim 11, 12 or 13, wherein a terminal apparatus side selects a communication system according to said system selection information and a length of a data packet to be transmitted.

15. The wireless communication method according to any one of claims 11 to 14, wherein a terminal apparatus side selects a communication system according to said system selection information and the number of retransmissions for a data packet to be transmitted.

16. The wireless communication method according to any one of claims 11 to 15, wherein a base station apparatus side chooses between said first contention-based communication system and said second contention-based communication system or leaves no communication system selected according to a communication situation; and
said base station apparatus side transmits to said terminal apparatus an idle signal including system specification information specifying a selected communication system or specifying no communication system selected.

17. The wireless communication method according to any one of claims 11 to 16, wherein when said reservation packet is received from one terminal apparatus, said base station apparatus side transmits to each terminal apparatus a polling signal including terminal identification information for specifying that terminal apparatus.

18. The wireless communication method according to claim 17, wherein said terminal apparatus side transmits a data packet according to reception of a polling signal when a polling signal received after reservation packet transmission contains its own terminal specification information.
